# DEMANDE DE BREVET EUROPEEN

(11) **EP 4 202 161 A1**
(43) Date de publication de la demande: **28.06.2023**
(21) Numéro de dépôt: 23157079.7
(22) Date de dépôt: 11.03.2022
(51) Int. Cl.: E05B 81/76, E05B 85/10

(54) **COMMANDE D'OUVERTURE EXTÉRIEURE À ACTIONNEMENT ÉLECTRIQUE**

(30) Priorité: 25.03.2021 FR 2103002
(62) Demande divisionnaire de: 22161536.2
(71) Demandeur: Akwel Vigo Spain SL, 36213 Vigo Pontevedra (ES)
(72) Inventeur: VAZQUEZ CARBALLO, Oscar José, 36201 Vigo (ES); COUTO MAQUIEIRA, Javier Delmiro, 36157 Pontevedra (ES); GARCIA RODRIGUEZ, Julio, 36003 Pontevedra (ES)
(74) Mandataire: Martin, Marie-Aude

(57) **Abrégé**

La commande (10) est configurée pour être intégrée et dissimulée dans un montant (114) d'une vitre (106) de l'ouvrant (104), et comprend un socle fixé selon le montant (114), un enjoliveur (16) configuré pour habiller extérieurement la commande d'ouverture (10) sur le montant (114) et supporté par le socle et une interface de commande d'actionnement électrique d'une serrure de l'ouvrant (104). Selon l'invention, l'enjoliveur (16) du montant (114) est conformé pour épouser la forme extérieure du montant (114).

## Description

La présente invention concerne une commande d'ouverture extérieure pour une porte de d'un véhicule automobile. Plus particulièrement, cette invention se rapporte à une commande d'ouverture extérieure d'une porte latérale de véhicule automobile, pouvant être indifféremment une porte avant ou une porte arrière, commande qui est intégrée et dissimulée dans un montant, par exemple un montant de la carrosserie du véhicule délimitant une vitre latérale ou encore un montant arrière d'un panneau de custode, adjacent à la porte considérée.

Les portes latérales des véhicules automobiles sont généralement équipées d'une commande d'ouverture dont la partie apparente est une poignée, désignée couramment palette de préhension, présentant une forme générale comparable à celle d'une poignée de porte de réfrigérateur. De telles poignées forment en général des excroissances importantes sur les flancs de la carrosserie du véhicule ou, même si elles sont plus ou moins encastrées dans le panneau de porte, elles restent très apparentes.

Une tendance actuelle, dans la conception des véhicules automobiles, est de rendre les commandes discrètes, en essayant de les occulter. En particulier, en ce qui concerne les commandes d'ouverture extérieures de portes, il a déjà été proposé de dissimuler ces commandes en les intégrant dans l'encadrement de la porte, ceci en prévoyant une poignée du genre palette affleurant un montant situé à l'arrière de la vitre de la porte considérée. Un exemple de commande d'ouverture extérieure de porte de ce genre peut être trouvé dans la demande de brevet français FR3034713A1.

Toutefois, une telle commande d'ouverture extérieure n'est pas totalement dissimulable sur le montant, car la palette comporte nécessairement une importante découpe centrale prévue pour l'introduction de la main et la manipulation de cette palette. Ainsi, il subsiste au niveau de l'implantation de la commande d'ouverture sur le montant, des lignes de délimitation des différents organes composant la commande d'ouverture qui nuisent à la perception globale de l'ensemble par un observateur.

L'invention a notamment pour but de fournir une commande d'ouverture extérieure remédiant aux inconvénients précités de l'art antérieur.

A cet effet, l'invention a notamment pour objet une commande d'ouverture extérieure pour un ouvrant d'un véhicule automobile configurée pour être intégrée et dissimulée dans un montant d'une vitre de l'ouvrant, ladite commande comprenant un socle configuré pour être fixé selon le montant, un enjoliveur configuré pour habiller extérieurement la commande d'ouverture sur le montant et supporté par le socle et une interface de commande d'actionnement électrique d'une serrure de l'ouvrant, caractérisé en ce que l'enjoliveur du montant est conformé pour épouser la forme extérieure du montant et en ce que le socle et l'enjoliveur sont réunis solidairement pour former une pièce qui délimite un évidement concave pourvu d'une ouverture d'accès manuel tournée d'un côté latéral de l'ouvrant, ledit évidement concave comprenant une paroi frontale par rapport à laquelle l'interface de commande est agencée de façon à commander l'actionnement électrique de la serrure de l'ouvrant lors de la traction manuelle de l'ouvrant par la paroi frontale de l'évidement.

La commande d'ouverture extérieure ne présente au repos aucune excroissance et aucune interruption vis-à-vis du profil de la carrosserie au niveau du montant. L'enjoliveur s'intègre parfaitement sur le montant ce qui permet d'assurer une finition esthétique et aérodynamique du véhicule.

Par ailleurs, l'actionnement de la commande est particulièrement ergonomique car l'interface de commande est agencée sur la paroi frontale de la pièce formée par l'enjoliveur et le socle qui permet d'exercer une traction de l'ouvrant vers son ouverture tout en actionnant le déverrouillage et décrochage de l'ouvrant.

Une commande d'ouverture selon l'invention peut en outre comporter l'une des caractéristiques suivantes.

Dans un mode de réalisation préféré de l'invention, la commande comprend une palette de préhension logée dans l'évidement et configurée pour habiller intérieurement l'évidement concave en partant sensiblement de l'ouverture de l'évidement et pour permettre l'interaction de l'utilisateur avec l'interface de commande lors de la préhension de la palette.

Dans un mode de réalisation préféré de l'invention, la palette est pourvue d'un corps délimitant une surface concave d'habillage intérieur de l'évidement, de concavité tournée vers l'ouverture.

Dans un mode de réalisation préféré de l'invention, la palette est montée pivotante à l'intérieur de l'évidement concave entre une position de repos dans laquelle l'interface de commande s'étend, dans un état non actif, à l'intérieur d'un espacement intercalaire formé entre la palette et la paroi frontale et une position basculée de la palette vers ladite paroi frontale dans laquelle l'interface de commande est dans un état actif de commande de l'actionnement électrique de la serrure par rapprochement de la paroi frontale et de la palette conduisant à l'application d'une pression de contact sur l'interface.

Dans un mode de réalisation préféré de l'invention, l'application dudit geste de traction manuelle de l'ouvrant en direction de la paroi frontale de l'évidement provoque le basculement de la position de repos à la position active de la palette.

Dans un mode de réalisation préféré de l'invention, la palette est montée intégrée fixe dans l'évidement concave et l'interface de commande est agencée à l'intérieur d'un espace de préhension de la palette dans une zone de la palette s'étendant au droit de la paroi frontale de l'évidement.

Dans un mode de réalisation préféré de l'invention, l'interface de commande est agencée de façon adjacente et en retrait par rapport à un bord de l'ouverture de l'évidement.

Dans un mode de réalisation préféré de l'invention, l'interface de commande est activable par pression de contact d'un doigt et comprend un interrupteur de type à bouton-poussoir ou de type à surface tactile.

Dans un mode de réalisation préféré de l'invention, l'enjoliveur comprend une face externe décorative recouverte d'un revêtement d'habillage de type adhésif mat ou brillant.

Dans un mode de réalisation préféré de l'invention, le socle comprend une pièce guide-vitre et l'enjoliveur est configuré pour recouvrir au moins partiellement cette pièce.

Dans un mode de réalisation préféré de l'invention, l'enjoliveur comprend un bord latéral prévu pour être monté du côté d'un panneau vitré de l'ouvrant présentant un contour non rectiligne.

L'invention a encore pour objet un ouvrant de véhicule automobile comprenant une commande d'ouverture extérieure caractérisé en ce que la commande d'ouverture est une commande d'ouverture selon l'invention intégrée et dissimulée dans un montant d'un panneau de vitre de l'ouvrant.

L'invention a enfin pour objet un véhicule automobile comprenant un ouvrant selon l'invention, dans lequel la commande d'ouverture est accessible à la préhension par une cavité ménagée dans une paroi du véhicule qui est adjacente au montant de l'ouvrant, tel qu'une paroi d'un panneau de custode.

D'autres caractéristiques et avantages de l'invention apparaîtront à la lumière de la description qui suit, faite en référence aux dessins annexés dans lesquels :
[Fig 1] : la figure 1 représente une vue en perspective d'un véhicule automobile comprenant une commande d'ouverture extérieure selon un premier mode de réalisation de l'invention montée sur un montant arrière d'un ouvrant du véhicule ;
[Fig 2] : la figure 2 représente une vue partielle à échelle agrandie illustrant une commande d'ouverture extérieure de la figure 1 ;
[Fig 3] : la figure 3 représente une vue en perspective de trois quart avant de la commande d'ouverture extérieure de la figure 2 ;
[Fig 4] : la figure 4 représente une vue arrière de la commande d'ouverture de la figure 3 ;
[Fig 5] : la figure 5 représente une vue en coupe de la commande d'ouverture selon la ligne de coupe V-V de la figure 4 ;
[Fig 6] : la figure 6 représente une position de repos (6A) et une position basculée (6B) d'une palette de préhension de la commande d'ouverture illustrée sur la figure 5 ;
[Fig 7] : la figure 7 représente une vue partielle à échelle agrandie illustrant une commande d'ouverture extérieure selon un deuxième mode de réalisation ;
[Fig 8] : la figure 8 représente une vue en perspective arrière de la commande d'ouverture de la figure 7 ;
[Fig 9] : la figure 9 représente une vue en coupe de la commande d'ouverture selon la ligne IX-IX de la figure 8.

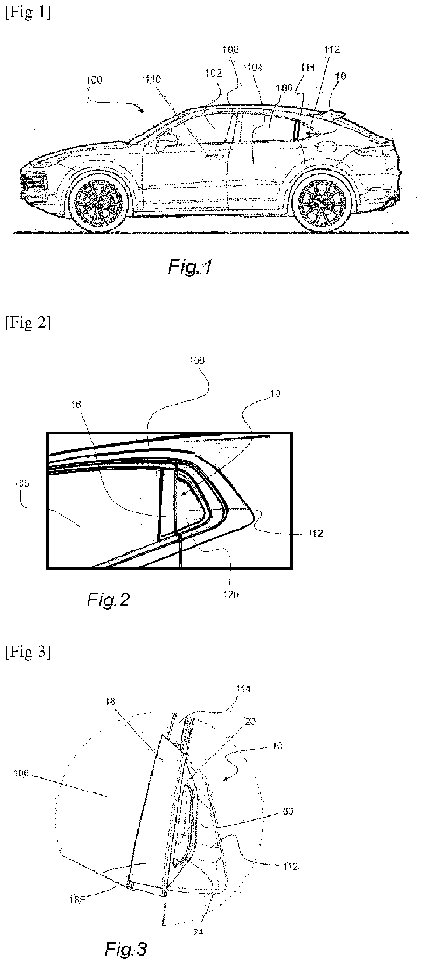

On a représenté sur **la** **figure 1** un véhicule automobile désigné par la référence générale 100. Ce véhicule 100 est un véhicule à quatre portes, avec deux portes latérales avant 102 et deux portes latérales arrière 104.

Ces portes latérales 102 et 104 sont toutes équipées de commandes d'ouverture extérieures, à savoir une commande d'ouverture 110 pour chaque porte avant 102 et une commande d'ouverture 10 selon l'invention pour chaque porte arrière 104.

Chaque porte latérale 102 ou 104 comprend un caisson de portière comportant classiquement une structure porteuse qui est partie intégrante de la carrosserie du véhicule, doublée d'une paroi de portière extérieure formée par une tôle externe du véhicule et désignée par panneau de porte.

La structure porteuse de la portière comprend également, dans le prolongement du panneau de porte, un cadre 108 qui définit le contour supérieur de la porte et à l'intérieur duquel s'étend généralement un panneau vitré 106 mobile ou fixe. Dans l'exemple illustré, le cadre de vitre 108 est destiné à encadrer et maintenir la vitre et comprend deux montants latéraux s'étendant verticalement et pouvant être reliés ou non à leurs extrémités supérieures par une traverse horizontale.

Sur chaque côté du véhicule, dans l'exemple illustré, la commande d'ouverture 110 de la porte avant 102 est montée sur la carrosserie extérieure de la porte avant 102 et se présente sous la forme d'une poignée montée en saillie du panneau de porte en regard d'un creux formé dans la tôle de ce panneau. La poignée est sous forme d'un corps longiligne extérieurement convexe de manière à former, entre le corps et la tôle, une ouverture de passage des doigts d'une main dans le creux pour permettre la traction de la poignée afin d'ouvrir la porte.

Conformément à l'invention, la commande d'ouverture 10 de la porte arrière 104 est implantée à proximité d'un montant vertical arrière 114, au niveau d'un montant vertical du cadre 108 de la vitre 106 de cette porte arrière 104.

Dans l'exemple illustré, le montant arrière 114 sépare une vitre de la porte arrière 104 d'un panneau plein de custode 112 et dans ce cas, la commande d'ouverture 10 est implantée à proximité de ce panneau de custode 112. Bien entendu, dans une variante non illustrée, le véhicule peut comporter un panneau de custode vitré (connue selon la terminologie anglo-saxonne par l'expression « quarter window »).

Les figures 1 à 6 illustrent la commande d'ouverture 10 extérieure associée à la porte arrière 104, conforme à un premier mode de réalisation de l'invention.

Conformément à ce premier mode de réalisation de l'invention, la commande 10 comprend un socle 14 fixé selon le montant 114 et un enjoliveur 16 configuré pour habiller extérieurement la commande d'ouverture selon le montant 114.

En particulier, l'enjoliveur 16 du montant 114 est conformé pour épouser parfaitement la forme extérieure du montant 114. Cette conformation de l'enjoliveur 16 garantit une finition esthétique de la commande d'ouverture 10 optimale en supprimant toute interruption inesthétique sur le montant 114.

De préférence, l'enjoliveur 16 a une forme générale allongée destinée à s'étendre longitudinalement verticalement le long d'un côté du cadre 108 du panneau vitré 106. L'enjoliveur 16 s'étend, dans cet exemple, à une de ses bordures latérales (à gauche de la figure 2) sur le cadre de vitre 106 et à l'autre de ses bordures latérales (à droite de la figure 2) en bord périphérique de portière arrière 104.

Selon le premier mode de réalisation de l'invention, le socle 14 et l'enjoliveur 16 sont assemblés solidairement pour former une pièce 12. Cette pièce 12 délimite un évidement concave 22 comprenant une ouverture 24 s'étendant du côté d'un bord extérieur latéral de l'ouvrant 104. Cette ouverture 24 permet l'accès manuel d'un utilisateur pour actionner la commande d'ouverture 10.

L'assemblage de l'enjoliveur 16 et du socle 14 au montant 114 peut être réalisé selon de nombreuses configurations et avec des moyens de liaison mécaniques classiques 40 qui ne seront pas plus décrits par la suite.

De préférence, le socle 14 est fixé sur un montant de carrosserie de l'ouvrant 104 et l'enjoliveur 16 est monté par exemple sur le socle 14 de façon à recouvrir et à masquer complètement le socle 14.

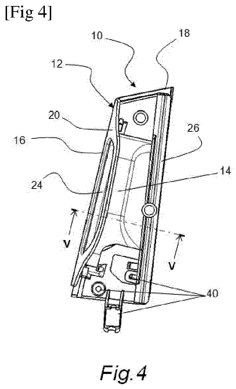

Dans l'exemple illustré sur les figures 3 et 4, l'enjoliveur 16 comprend une paroi principale 18 de couverture du montant 114 et un prolongement de paroi latéral 20 conformée pour entourer l'ouverture 24 de l'évidement concave 22.

De préférence, l'enjoliveur 16 comprend sur une face externe décorative 18E de sa paroi principale 18 un revêtement d'habillage de type adhésif mat ou brillant, généralement d'une couleur foncée telle qu'une couleur noire. En outre, ce revêtement d'habillage peut de préférence être choisi identique au revêtement du panneau de custode plein 112.

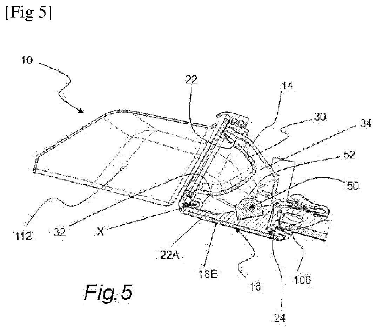

En outre, de préférence, le socle 14 comprend sur un de ses bords latéraux encore une partie guide-vitre 26 en forme générale de « U » permettant de guider la vitre 106 lors de son coulissement vertical. De préférence, l'enjoliveur 16 est configuré pour recouvrir cette pièce guide-vitre 26 au moins partiellement comme cela est visible sur la figure 5.

Dans l'exemple illustré, l'enjoliveur 16 se situe en affleurement de la carrosserie, plus particulièrement du cadre 108 de la vitre 106.

Par exemple, l'enjoliveur 16 comprend un bord latéral prévu pour être monté du côté d'un panneau vitré 106 de l'ouvrant 104 qui présente un contour non rectiligne. Plus généralement, le contour de l'enjoliveur 16 peut représenter une figure géométrique complexe non nécessairement triangulaire ou rectangulaire. Ceci présente un avantage d'intégrer parfaitement la commande d'ouverture dans le montant arrière 114 de l'ouvrant 104 quelle que soit la forme du montant arrière 114 tout en permettant une adaptation de la forme du montant 114 au style du véhicule.

Selon ce premier mode de réalisation, la commande d'ouverture 10 comprend une interface 50 de commande de l'activation électrique d'une serrure de l'ouvrant 104.

Généralement, l'ouverture d'un ouvrant 104 d'un véhicule automobile, par exemple une porte arrière du véhicule, est réalisée au moyen d'une serrure comprenant un pêne solidaire de l'ouvrant apte à coopérer avec une gâche solidaire de la carrosserie.

En pratique, on appelle ouverture de la serrure l'action de libérer le pêne, ce qui permet le décrochage de l'ouvrant ; inversement, on appelle fermeture de la serrure le fait de maintenir le pêne dans la serrure, ce qui interdit le décrochage de l'ouvrant.

Une telle serrure permet ainsi le maintien en position fermée de l'ouvrant du véhicule automobile. La serrure permet aussi de décrocher l'ouvrant par action sur la commande d'ouverture intérieure (ou extérieure) reliée à la serrure et actionnable par un utilisateur. Lors de l'ouverture de l'ouvrant depuis l'extérieur du véhicule, le pêne est dégagé de la gâche par actionnement de la commande d'ouverture extérieure.

L'actionnement de la serrure peut être réalisé électriquement au moyen d'un actionneur électromécanique (non représenté sur les figures) comme c'est le cas dans la commande d'ouverture 10 de l'invention. Dans ce cas, l'actionneur comprend par exemple un moteur électrique, alimenté électriquement par le circuit électrique principal du véhicule.

Dans l'exemple décrit, l'interface de commande 50 permet à l'usager de pouvoir émettre des instructions de commande en direction de l'actionneur électromécanique. En effet, afin d'augmenter le confort ergonomique, l'interface de commande 50 permet par exemple de détecter une pression de contact d'un appui d'un doigt d'un utilisateur et de déclencher une commande à destination de l'actionneur électromécanique suite à la détection de cette pression de contact. De préférence, l'interface de commande 50 est activable par pression de contact d'un doigt et comprend de préférence un interrupteur de type à bouton-poussoir ou de type à zone tactile.

En particulier, ledit évidement concave 22 comprend une paroi frontale 22A par rapport à laquelle est agencée l'interface de commande 50. L'interface de commande 50 est ainsi disposée dans la commande d'ouverture 10 de manière à ce que l'application d'un geste de traction manuelle de l'ouvrant 104 par cette paroi frontale 22A de l'évidement 22 provoque une activation de l'interface de commande 50 entraînant la commande de l'actionnement électrique de la serrure de porte.

Dans le premier mode de réalisation, cette interaction manuelle de l'utilisateur avec l'interface de commande 50 est réalisée indirectement par l'intermédiaire d'une palette de préhension 30 mobile logée dans l'évidement concave 22.

Dans ce premier mode de réalisation, la commande d'ouverture 10 comprend un organe de manoeuvre facilitant la préhension de la commande d'ouverture 10 désignée couramment par palette de préhension 30.

De préférence, cette palette 30 de préhension est logée dans l'évidement 22 et configurée pour habiller intérieurement l'évidement concave 22 en partant de l'ouverture 24 de l'évidement 22 en se déployant à l'intérieur de l'évidement 22 tout en permettant une interaction d'un utilisateur avec l'interface de commande 50.

Cette palette 30 est montée pivotante à l'intérieur de l'évidement 22 entre une position de repos et une position basculée à l'intérieur de l'évidement 22 vers la paroi frontale 22A. Par exemple, la palette 30 est montée articulée autour d'un axe de rotation X s'étendant longitudinalement le long d'un bord de l'ouverture 24 de l'évidement 22, en étant adjacent à la paroi frontale 22A. L'axe de rotation X s'étend par exemple longitudinalement sensiblement en suivant une direction longitudinale du montant arrière 114.

Dans l'exemple illustré, la palette 30 est pourvue d'un corps délimitant une surface concave 32 d'habillage intérieur de l'évidement 22, de concavité tournée vers l'ouverture 24. La palette 30 a par exemple une forme générale de bol dont la surface interne concave 32 vient se raccorder sensiblement à un contour de l'ouverture 24 de l'évidement 22 comme cela est visible sur la figure 5 dans la position de repos.

En outre, de préférence, dans la position de repos, la palette 30 et la paroi frontale 22A délimite un espacement intercalaire 34 à l'intérieur duquel est disposé l'interface de commande 50 dans un état inactif. Dans l'exemple illustré, l'interface de commande 50 est agencée sur une face interne de la paroi frontale 22A positionnée sur un trajet de basculement de la palette 30.

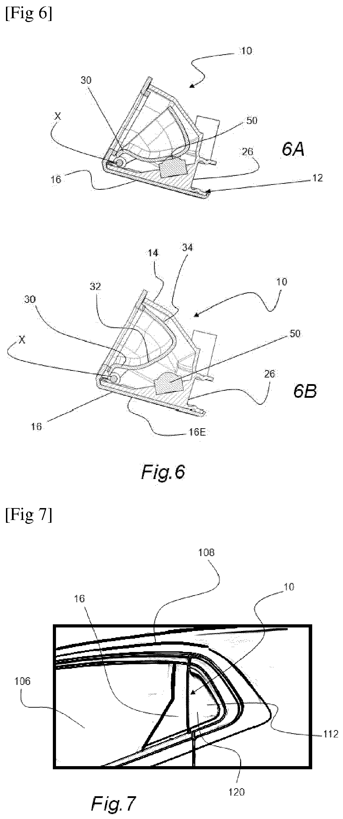

De préférence, en référence à la figure 6, la palette 30 est montée pivotante à l'intérieur de l'évidement concave 22 entre sa position de repos (6B), dans laquelle l'interface de commande 50 est dans un état inactif, et sa position active basculée vers la paroi frontale 22A (6A), produisant l'application d'une pression de contact sur l'interface de commande 50 par rapprochement de la palette 30 vers la paroi frontale 22A.

Ainsi, l'application du geste de traction manuelle de l'ouvrant par la paroi frontale 22A de l'évidement 22 provoque de façon très intuitive pour l'utilisateur le basculement de la position de repos à la position active de la palette 30 entraînant l'actionnement électrique de la serrure permettant l'ouverture de l'ouvrant 104.

Afin de limiter la course du trajet de pivotement de la palette 30 à l'intérieur de l'évidement 22, la paroi frontale 22A de l'évidement 22 présente un relief sur sa face interne sur lequel est agencée l'interface de commande 50. Ce relief est configuré pour permettre de diminuer l'amplitude angulaire de pivotement de la palette 30 à l'intérieur de l'évidement 22. Par exemple, la face interne de la paroi frontale 22A par pliage de la face interne 22A. Ceci permet de diminuer l'amplitude angulaire de pivotement de la palette 30 à l'intérieur de l'évidement 22 ce qui permet d'optimiser l'ergonomie de la commande d'ouverture 10.

Par exemple, l'interface de commande 50 comprend un interrupteur de type à bouton poussoir 52. Cet interrupteur 52 comprend dans l'exemple illustré une portion de contact ayant une forme générale convexe, par exemple en forme de dôme convexe et définissant une paroi d'actionnement enfonçable. L'enfoncement de cette paroi permet le déclenchement de l'interrupteur 52.

Ainsi, dans l'exemple illustré sur la figure 6 (schéma 6A), lors du basculement de la palette 30 vers la paroi frontale 22A de l'évidement 22, la paroi de la palette 30 vient écraser ou enfoncer la paroi d'actionnement en forme de dôme convexe de l'interrupteur 52 conduisant à son déclenchement.

Dans ce premier mode de réalisation, le chemin inverse de retour de la palette 30 à la position de repos après ouverture de la porte se fait par exemple à l'aide de moyens élastiques de type ressort qui ne seront pas plus décrits.

On a représenté sur les figures 7 à 9 un deuxième mode de réalisation de l'invention. Dans ce deuxième mode de réalisation, les éléments analogues à ceux du premier mode de réalisation portent des références identiques.

Sur la figure 7, l'enjoliveur 16 a une forme géométrique complexe avec un bord latéral non rectiligne, par exemple en formant un angle. Bien entendu, cette forme est non limitative.

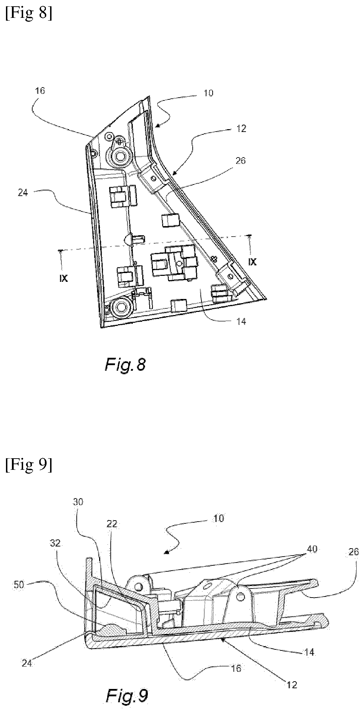

Sur ces figures, le socle 14 et l'enjoliveur 16 délimitent ensemble l'évidement 22. Par exemple, comme illustré sur la figure 9, le socle 14 délimite une paroi dorsale et une paroi latérale de l'évidement 22 et l'enjoliveur 16 délimite une paroi frontale 22A de l'évidement 22. Le socle 14 et l'enjoliveur 16 se prolongent ensuite de façon adjacente au-delà de l'évidement 22 dans le sens transversal du montant 114.

Dans cet exemple, la palette de préhension 30 est fixe par rapport à la pièce 12 et s'encastre complètement à l'intérieur de l'évidement 22 par complémentarité de forme.

De préférence, la palette 30 est montée intégrée fixement dans l'évidement concave 22 et l'interface de commande 50 est agencée à l'intérieur d'un espace de préhension de la palette 30 dans une zone de la palette 30 s'étendant au droit de la paroi frontale 22A de l'évidement 22.

De préférence, dans ce deuxième mode de réalisation, l'interface de commande 50 est agencée de façon adjacente et en retrait par rapport à un bord de l'ouverture 24 de l'évidement 22.Dans ce deuxième mode de réalisation, l'interface de commande 50 s'étend à l'intérieur d'un volume de préhension de la palette 30, par exemple dans une région de la surface d'habillage de la palette 30 s'étendant au droit de la paroi frontale 22A de l'évidement 22. Dans ce deuxième mode de réalisation, l'utilisateur agit directement sur l'interface de commande 50.

Par exemple, comme dans le premier mode de réalisation, l'interface de commande 50 comprend un interrupteur de type à bouton poussoir 52. Cet interrupteur 52 comprend une portion de contact ayant une forme générale convexe, par exemple en forme de dôme convexe et définissant une paroi d'actionnement enfonçable. L'enfoncement de cette paroi permet le déclenchement de l'interrupteur 52.

Comme cela est illustré sur la figure 9, le bouton poussoir 52 s'étend de façon adjacente à l'ouverture 24 de l'évidement 22 sur une paroi de la palette 30 s'étendant sur la paroi frontale 22A de l'évidement 22.

De préférence, dans les deux modes de réalisation de l'invention, la commande d'ouverture 10 est accessible à la préhension par une cavité 120 ménagée dans une paroi du véhicule 100 qui est adjacente au montant 114 de l'ouvrant 104. Dans l'exemple illustré, la cavité 120 est ménagée dans le panneau de custode 112.

On va maintenant décrire les principaux aspects du fonctionnement d'une commande d'ouverture selon le premier mode de réalisation de l'invention en référence aux figures 1 à 6.

L'enjoliveur 16 épouse parfaitement le montant vertical arrière 114 de sorte que la commande d'ouverture 10 est entièrement dissimulée dans le montant 114.

Initialement, la palette 12 est positionnée dans sa configuration de repos à l'intérieur du logement concave 22 de la pièce 12 formée par l'assemblage de l'enjoliveur 16 et du socle 14.

Pour amorcer le pivotement de la palette 30, l'utilisateur engage les doigts d'une de ses mains à l'intérieur du creux formé par l'évidement concave 22. Par exemple, ce creux est rendu accessible latéralement à une préhension grâce à la cavité 120 ménagée dans le panneau de custode 112. L'utilisateur parvient à réaliser ainsi la traction manuelle de la paroi frontale 22A de l'évidement 22 en engageant le pivotement de la palette 30 à l'intérieur de l'évidement 22 jusqu'à la paroi frontale 22A.

Ce déplacement conduit au pivotement de la palette 30 jusqu'à une position de pivotement maximale à l'intérieur de l'évidement 22. En fin de mouvement de la palette 30, la palette 30 vient agir sur l'interface de commande 50, ce qui provoque la commande d'actionnement électrique de la serrure permettant l'ouverture de l'ouvrant 104.

Lorsque la palette 30 est lâchée, celle-ci revient en position initiale de repos, sous l'effet des divers moyens de rappels prévus qui ne seront pas plus détaillés.

L'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Commande (10) d'ouverture extérieure pour un ouvrant (104) d'un véhicule automobile (100) configurée pour être intégrée et dissimulée dans un montant (114) d'une vitre (106) de l'ouvrant (104), ladite commande (10) comprenant un socle (14) configuré pour être fixé selon le montant (114), un enjoliveur (16) configuré pour habiller extérieurement la commande d'ouverture (10) sur le montant (114) et supporté par le socle (14) et une interface (50) de commande d'actionnement électrique d'une serrure de l'ouvrant (104), **caractérisé en ce que** l'enjoliveur (16) du montant (114) est conformé pour épouser la forme extérieure du montant (114) **et en ce que** le socle (14) et l'enjoliveur (16) sont réunis solidairement pour former une pièce (12) qui délimite un évidement (22) concave pourvu d'une ouverture (24) d'accès manuel tournée d'un côté latéral de l'ouvrant (104), ledit évidement concave (22) comprenant une paroi frontale (22A) par rapport à laquelle l'interface de commande (50) est agencée de façon à commander l'actionnement électrique de la serrure de l'ouvrant lors de la traction manuelle de l'ouvrant (104) par la paroi frontale (22A) de l'évidement (22).

2. Commande (10) selon la revendication précédente, comprenant une palette (30) de préhension logée dans l'évidement (22) et configurée pour habiller intérieurement l'évidement concave (22) en partant sensiblement de l'ouverture (24) de l'évidement (22) et pour permettre l'interaction de l'utilisateur avec l'interface de commande (50) lors de la préhension de la palette (30).

3. Commande (10) selon la revendication précédente, dans laquelle la palette (30) est pourvue d'un corps délimitant une surface concave d'habillage intérieur de l'évidement (22), de concavité tournée vers l'ouverture (24).

4. Commande (10) selon la revendication 2 ou 3, dans laquelle la palette (30) est montée pivotante à l'intérieur de l'évidement concave (22) entre une position de repos dans laquelle l'interface de commande (50) s'étend, dans un état non actif, à l'intérieur d'un espacement intercalaire formé entre la palette (30) et la paroi frontale (22A) et une position basculée de la palette (30) vers ladite paroi frontale (22A) dans laquelle l'interface de commande (50) est dans un état actif de commande de l'actionnement électrique de la serrure par rapprochement de la paroi frontale (22A) et de la palette (30) conduisant à l'application d'une pression de contact sur l'interface (50).

5. Commande (10) selon la revendication précédente, dans laquelle l'application dudit geste de traction manuelle de l'ouvrant en direction de la paroi frontale (22A) de l'évidement (22) provoque le basculement de la position de repos à la position active de la palette (30).

6. Commande (10) selon la revendication 2 ou 3, dans laquelle la palette (30) est montée intégrée fixement dans l'évidement concave (22) et l'interface de commande (50) est agencée à l'intérieur d'un espace de préhension de la palette (30) dans une zone de la palette (30) s'étendant au droit de la paroi frontale (22A) de l'évidement (22).

7. Commande (10) selon la revendication précédente, dans laquelle l'interface de commande (50) est agencée de façon adjacente et en retrait par rapport à un bord de l'ouverture (24) de l'évidement (22).

8. Commande (10) selon l'une quelconque des revendications précédentes, dans laquelle l'interface de commande (30) est activable par pression de contact d'un doigt et comprend un interrupteur de type à bouton-poussoir ou de type à surface tactile.

9. Commande (10) selon l'une quelconque des revendications précédentes, dans lequel l'enjoliveur (16) comprend une face externe décorative recouverte d'un revêtement d'habillage de type adhésif mat ou brillant.

10. Commande (10) selon l'une quelconque des revendications précédentes, dans lequel le socle (14) comprend une pièce guide-vitre (24) et l'enjoliveur (16) est configuré pour recouvrir au moins partiellement cette pièce (24).

11. Commande (10) selon l'une quelconque des revendications précédentes, dans lequel l'enjoliveur (16) comprend un bord latéral prévu pour être monté du côté d'un panneau vitré (106) de l'ouvrant (104) présentant un contour non rectiligne.

12. Ouvrant (104) de véhicule automobile comprenant une commande d'ouverture extérieure **caractérisé en ce que** la commande d'ouverture est une commande d'ouverture (10) selon l'une quelconque des revendications précédentes intégrée et dissimulée dans un montant (114) d'un panneau de vitre (106) de l'ouvrant (104).

13. Véhicule automobile (100) comprenant un ouvrant (104) selon la revendication 12, dans lequel la commande d'ouverture (10) est accessible à la préhension par une cavité ménagée dans une paroi du véhicule (100) qui est adjacente au montant (114) de l'ouvrant (104), tel qu'une paroi d'un panneau de custode (112).
